(19) Europäisches Patentamt

European Patent Office

Office européen des brevets

(11) Veröffentlichungsnummer: **0 253 903 B1**

# (12) EUROPÄISCHE PATENTSCHRIFT

(45) Veröffentlichungstag der Patentschrift: **10.04.91**

(21) Anmeldenummer: **86108450.7**

(22) Anmeldetag: **20.06.86**

(51) Int. Cl.⁵: **H02K 9/19**, H02K 49/04

(54) Verfahren zum Kühlen einer Wirbelstromleistungsbremse.

(43) Veröffentlichungstag der Anmeldung:
**27.01.88 Patentblatt 88/04**

(45) Bekanntmachung des Hinweises auf die
Patenterteilung:
**10.04.91 Patentblatt 91/15**

(84) Benannte Vertragsstaaten:
**AT DE FR GB IT**

(56) Entgegenhaltungen:
EP-A- 0 185 791
US-A- 2 386 701
US-A- 2 414 532
US-A- 2 571 872
US-A- 2 611 798

(73) Patentinhaber: **CARL SCHENCK AG**
**Landwehrstrasse 55 Postfach 40 18**
**W-6100 Darmstadt(DE)**

(72) Erfinder: **Dodt, Hans-Walter**
**An der Buche 12**
**W-6109 Mühltal(DE)**

(74) Vertreter: **Dallhammer, Herbert, Dipl.-Ing.**
**CARL SCHENCK AG Patentabteilung Post-**
**fach 4018 Landwehrstrasse 55**
**W-6100 Darmstadt(DE)**

Rank Xerox (UK) Business Services

## Beschreibung

Die Erfindung betrifft ein Verfahren zum Kühlen einer durch Wirbelströme aufgeheizten Gehäuseinnenwand einer Wirbelstromleistungsbremse mit einem Kühlmedium, wobei das Kühlmedium mehrfach umgelenkt wird, und eine Wirbelstromleistungsbremse zur Durchführung des Verfahrens.

Wirbelstromleistungsbremsen werden zur Untersuchung von Kraftmaschinen eingesetzt. Hierbei wird die von den Kraftmaschinen abgegebene Leistung mittels Wirbelstrom in dem Bremsaggregat in Wärme umgewandelt. Zufolge der Wirbelströme heizt sich das gesamte Bremsenaggregat auf, und es muß dafür Sorge getragen werden, daß die auftretende Wärme abgeführt wird.

Die bisherigen Ausführungen von Wirbelstromleistungsbremsen besitzen allgemein den Nachteil, daß sie bei hohen Dauerbelastungen zufolge Nichtabführbarkeit der auftretenden Wärme nur begrenzt einsetzbar sind. Zufolge des schlechten Wärmeübergangs, hervorgerufen durch die Form der Kühlkanäle, und durch die in den Kühlkanälen herrschende Strömungsgeschwindigkeit treten derart hohe Temperaturunterschiede zwischen rotorseitiger Innenwand der Bremse und der Außenwand auf, daß sich die die Kühlflüssigkeit führenden Bauteile plastisch verformen. Das kann zum Festgehen der Wirbelstromleistungsbremse führen oder die Temperatursteigerung infolge Verformung kann nach einer gewissen Zeit bis in den Bereich der Lagerung vordringen und dort die Zugelassene Lagertemperatur überschreiten. Durch wiederholte plastische Verformung bei relativ hoher Belastung treten in aufgeheizten Zonen nach relativ kurzem Betrieb Risse auf, die zum Kühlmittelaustritt in den Innenraum der Maschine und damit zum Unbrauchbarwerden führen.

Durch die gattungsgemäße US-PS-2,386,701 ist eine Wirbelstromleistungsbremse bekannt geworden, bei der zur Kühlung der Maschine von einem Verteiler aus durch Rohre geleitetes Kühlwasser in seinem Verlauf bis zum Austritt aus der Wirbelstromleistungsbremse immer stärker aufgeheizt wird, was zwangsläufig zu einer Verformung des Körpers führt. Die US-PS2,414,532 betrifft die Kühlung einer gekapselten elektrischen Maschine im Sinne eines Wärmetauschers, wobei Kühlwasser zur Kühlung der in der Maschine enthaltenen Kühlluft verwendet wird. In der EP-A-O 185 791, rangälter aber nachveröffentlicht, wird ein Verfahren zum Kühlen einer durch Wirbelströme aufgeheizten Innenwand einer Wirbelstromleistungsbremse mit einem Kühlmedium und eine Wirbelstromleistungsbremse zur Durchführung des Verfahrens offenbart.

Ausgehend hiervon leigt der Erfindung die Aufgabe zugrunde, zirischen Ein- und Austritt der zu kühlenden Wirbelstromleistungsbremsenzone eine gleichmässige Wärmeabfuhr bei gleichem Wärmeübergang zwischen Kühlmedium und zu kühlendem Bauteil zu erreichen.

Diese Aufgabe wird durch die kennzeichnenden Merkmale des Anspruchs 1 gelöst. Durch die Vorgabe gleicher Strömungsgeschwindigkeit des Kühlmediums im Ein- und Austritt des zu kühlenden Abschnitts und durch die Wegverlängerung des einzelnen Kühlmittelfadens im zu kühlenden Bereich der Wirbelstromleistungsbremse, also in deren Mantelbereich, wird ein gleichförmiger Wärmeübergang und eine gleichmäßige Wärmeabfuhr erreicht. Dadurch werden örtliche Überhitzungen an dem durch die Wirbelströme aufgeheizten Material der Wirbelstromleistungsbremse auch bei Dauerbetrieb eindeutig vermieden. Durch die Erfindung wird somit ein Verfahren offenbart, welches gestattet, bei vorgegebener Größe einer Wirbelstromleistungsbremse deren Lebensdauer zu erhöhen.

Eine besonders geeignete Wirbelstromleistungsbremse zur Durchführung des Verfahrens mit Anschlußflanschen für zu untersuchende Kraftmaschinen mit einer im magnetisierbaren Teil angeordneten Ständerwicklung als Erreger und einem aus magnetisierbarem Material bestehenden Rotor mit Zähnen und um den Rotor angeordnete Kühlkanäle sowie eine Kühlmediumzu- und -abführung zeichnet sich durch die im Kennzeichen des Anspruchs 2 unter Schutz gestellte Ausgestaltung aus. Insbesondere durch die Führung der Innenwände der Ein- und Austrittsräume und deren Versetzung um 180° gegeneinander strömt das Kühlmedium mit gleicher Geschwindigkeit in den zu kühlenden Bereich ein und wird aus diesem auch mit derselben Geschwindigkeit abgeführt und es wird durch die Anordnung von Kühlschlangen der Strömungsweg des einzelnen Kühlmittelfadens vom Ein- zum Austritt beachtlich verlängert, so daß eine gleichförmige Wärmeabfuhr bewirkt wird. Des weiteren wird es als eine erfinderische Ausgestaltung angesehen, daß Ein- und Austrittsraum ausgehend vom größten Abstand zwischen zylindrischer Aussenwand und der Innenwand einen spiraligen Verlauf von 0° bis 180° und eine spiraligen Verlauf von 360° bis 180° aufweisen, also aus zwei Teilspiralen zusammengesetzt sind. Als Kühlmittel können sowohl gasförmige als auch flüssige Medien treten.

Gemäß kennzeichnendem Merkmal des Anspruchs 3 wird eine besonders bervorzugte Anzahl von Kühlschlangen unter Schutz gestellt. Hiermit wird bei minimalen Kühlmitteldurchsatz eine maximale Kühlwirkung erreicht.

In der nachfolgenden Zeichnung wird die Erfindung näher erläutert. Es zeigen in schematischer Darstellung:

Fig. 1    einen Schnitt durch eine Wirbelstromleistungsbremse bekannter
          Bauart

Fig. 2    einen Kühlkanal zur Kühlung der Wirbelstromleistungsbremse bekannter
          Bauart nach Fig. 1

Fig. 3    einen Schnitt durch eine erfindungsgemäße Wirbelstromleistungsbremse

Fig. 3a   einen Zylinderschnitt durch den Kühlmantel nach Fig. 3

Fig. 4    Kühlmittelverlauf durch den Kühlmantel

Für dieselben Bauteile werden in den einzelnen Figuren dieselben Bezugsziffern verwendet.

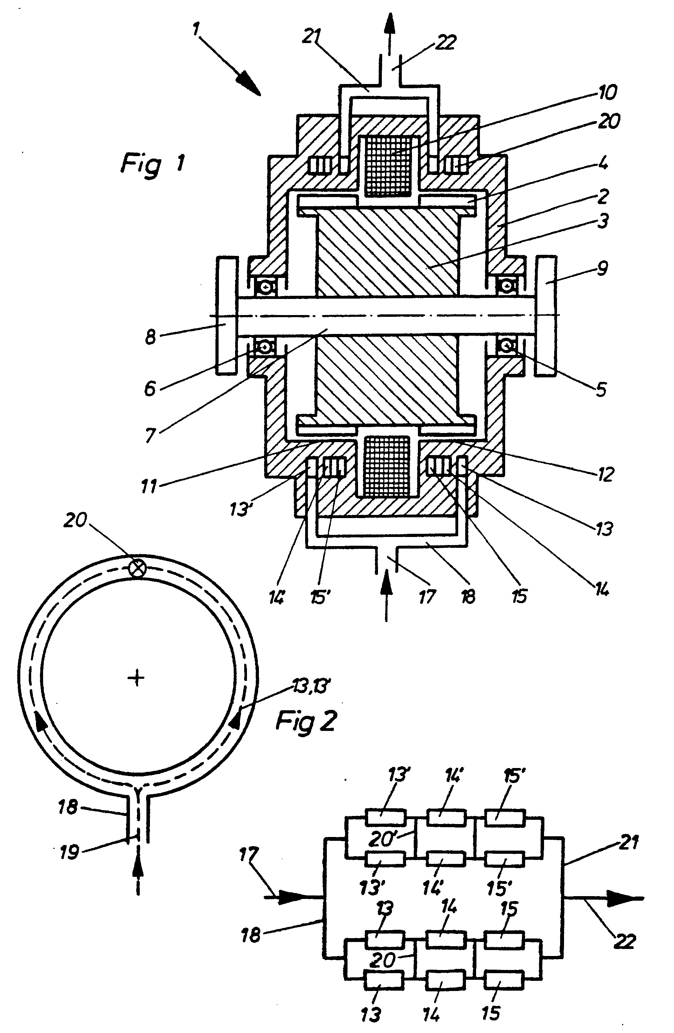

Gemäß Fig. 1 sind in einem pendelnd aufgehängten Gehäuse 2 einer Wirbelstromleistungsbremse 1 ein Polkörper 3, der an seinem Umfang Zähne 4 besitzt, auf einer in Kugellagern 5, 6 gelagerten Welle 7 angeordnet. Die Welle 7 ist mit Anschlußflanschen 8, 9 versehen, an die die zu untersuchende Kraftmaschine angekoppelt werden kann.

Dem Umfang des Polkörpers 3 gegenüber ist im Gehäuse 2 eine feststehende Erregerwicklung 10 vorgesehen, die von Gleichstrom durchflossen wird. Hierdurch entsteht ein magnetisches Feld, das an den Zähnen 4 des Polkörpers 3 stationär ist. Bei Rotation des Polkörpers 3 zufolge einer mit dem Anschlußflansch 9 verbundenen Kraftmaschine läuft das stationäre Feld mit um und in den die Zähne des Polkörpers 3 umgebenden Innenwänden 11, 12 des Gehäuses 2 pulsiert das magnetische Feld mit der Frequenz der vorbeilaufenden Zähne 4. Hierdurch entstehen Wirbelströme in diesen Wänden. Die hierdurch erzeugte Wärme an den Innenwänden wird über in Kühlkanälen 13 - 15 für die rechte Seite der Wirbelstromleistungsbremse und 13' - 15' für die linke Seite der Wirbelstromleistungsbremse durch ein Kühlmedium abgeführt.

Das Kühlmedium strömt über einen Einlaß 17 und eine Verteilungsleitung 18 in die Kühlkanäle der rechten bzw. linken Seite der Wirbelstromleistungsbremse.

Der Strömungsverlauf des Kühlmediums 19 wird anhand der Fig. 2 näher erläutert. Über die Verteilungsleitung 18 strömt ein Teil des Kühlmediums in Richtung des Kühlkanals 13 und der andere Teil des Kühlmediums in Richtung des Kühlkanals 13'. Im Kühlkanal 13 bzw. 13' wird das Kühlmedium noch einmal in zwei Teilströme aufgeteilt und zufolge des durch eine Pumpe erzeugten Förderdrucks bis zu einer Übergangsöffnung 20 transportiert und von dieser Übergangsöffnung 20 bzw. 20'in den nächsten Ring des Kühlkanals 14 bzw. 14' übergeleitet, wieder umgeführt und weitergeleitet an den Kühlkanal 15 bzw. 15' und von dort über eine Zusammenführleitung 21 in aufgeheiztem Zustand aus dem Auslaß 22 entlassen.

Durch die Führung des Kühlmediums in den ringförmigen Kühlkanälen 13 - 15 bzw. 13' - 15' wird das Gehäuse 2 im Bereich der Innenwände 11, 12 in ungleichmäßiger Weise gekühlt und zufolge der Größe der Kühlkanäle, bei denen die Gefahr des Zusetzens auftritt, was zu einer verminderten Kühlung führt, das Kühlergebnis weiter verringert. Da die Temperaturen an den Innenwänden 11, 12 beträchtlich höher sind als an den Außenwänden des Gehäuses 2, ist es verständlich, daß zufolge derartiger ringförmiger Kühlkanäle ein Verziehen des Gehäuses bei längerem Betrieb stattfindet. Dies führt bei extremer Belastung derartiger Wirbelstromleistungsbremsen auch zum Verziehen des Gehäuses, was letztlich zu Rissen in den die Kühlflüssigkeit führenden Bauteilen oder zum Festgehen der Wirbelstromleistungsbremse führt.

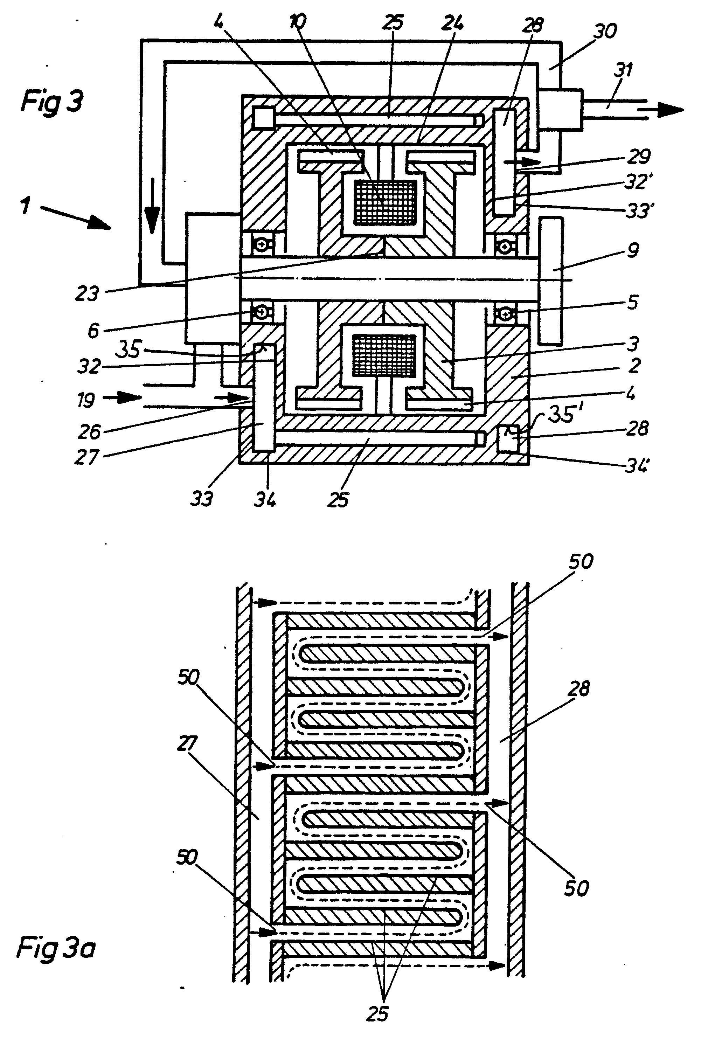

Fig. 3 stellt nunmehr die erfindungsgemäße Wirbelstromleistungsbremse schematisch dar. Im Gehäuse 2 der Wirbelstromleistungsbremse 1 ist der Polkörper 3 ebenfalls mit Zähnen 4 versehen und mittels Kugellagern 5, 6 gelagert. Die Wirbelstromleistungsbremse 1 besitzt ebenfalls einen Anschlußflansch 9 an dem eine zu untersuchende Kraftmaschine anschließbar ist. Ebenso besitzt die erfindungsgemäße Wirbelstromleistungsbremse eine Erregerwicklung 10, die erfindungsgemäß jedoch in den Polkörper 3 hineinragt. Durch Teilen des Polkörpers 3 im Bereich 23 wird erreicht, daß die Zähne 4 erfindungsgemäß die Erregerwicklung 10 ebenfalls mit umschließen. Lediglich im Bereich der Befestigung der Erregerwicklung 10 am Gehäuse 2 sind die Zähne 4 unterbrochen. Die Funktion der Wirbelstromleistungsbremse wurde bereits in Fig. 1 erläutert.

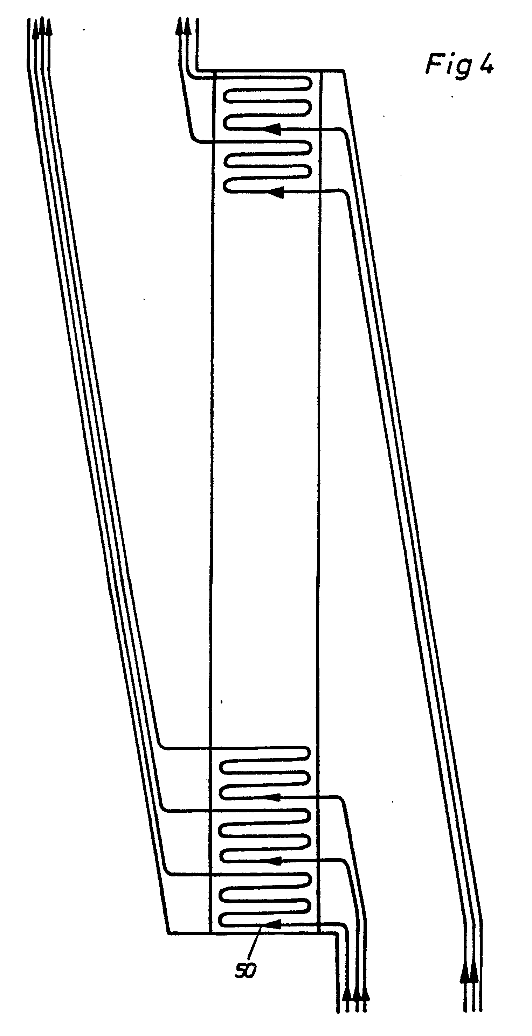

Im Falle der Erfindung handelt es sich um eine geschlossene zylindrische Innenwand 24, an der nunmehr im geringen Abstand Zähne 4 des Polkörpers 3 entlanglaufen. Die sich wie oben näher erläutert, aufheizende zylindrische Innenwand 24 wird durch axial verlaufende gerade Kühlkanäle 25, die im zylindrischen Wandteil des Gehäuses 2 verlaufen, umgeben. Die teilweise verschlossenen geraden Kühlkanäle 25 sind, wie aus der Fig. 3a entnehmbar, am Umfang des zylindrischen Teils in der Wand des Gehäuses 2 gleichmäßig verteilt. Sie bilden also eine Kühlschlange 50 (vgl. Fig. 3a und 4), so daß der Weg des einzelnen Stromfadens in der Zylinderwand wesentlich länger wird. Hierdurch wird bei Verringerung der insgesamt erforderlichen Stromfäden (Kühlmenge) eine Erhöhung der Kühlung erreicht.

Das Kühlmedium 19 tritt über eine Eintrittsöffnung 26 in einen Eintrittsraum 27 ein und fließt über die geraden Kühlkanäle 25 zu einem Austrittsraum 28 und von dort über eine Austrittsöffnung 29 entweder über eine Ringleitung 30 zurück zur Eintrittsöffnung 26 oder über einen Auslaß 31 aus.

Der Eintrittsraum 27 und der Austrittsraum 28 werden gebildet von Stirnwänden 32, 32' des Wirbelstromleistungsbremsengehäuses und von Deckflächen 33, 33; die in den Leistungsbremsen mit integriert sind und die die Eintrittsöffnung 26 bzw. Austrittsöffnung 29 tragen. Diese in axialer Richtung sich erstreckenden Begrenzungen des Eintrittsraumes und des Austrittsraumes werden in radialer Richtung zum einen von einer Zylinderwand 34 bzw. 34' als Außenwand und zum anderen von einer spiraligen Innenwand 35 bzw. 35'begrenzt.

Zufolge der erfindungsgemäßen spiraligen Ausgestaltung des Eintrittsraumes 27 und des Austrittsraumes 28, wobei die Eintrittsöffnung 26 gegenüber der Austrittsöffnung 29 um 180° verdreht angeordnet ist, ergibt eine Verteilung des Kühlmediums in diesem Raum dergestalt, daß der zu kühlende Bereich der Wirbelstromleistungsbremse von Kühlmedium durchflossen wird, daß jeder Stromfaden (vgl. Fig. 4) dem erfinderischen Verfahren gehorchend im Ein- und Austritt des zu kühlenden Abschnitts, also im Ein- und Austritt der Kühlschlange 50, die aus mehreren geraden Kühlkanälen 25 zusammengesetzt ist, die entsprechend verschlossen sind, gleiche Strömungsgeschwindigkeit herrscht.

## Ansprüche

1. Verfahren zum Kühlen einer durch Wirbelströme aufgeheizten Gehäuseinnenwand (24) einer Wirbelstromleistungsbremse (1) mit einem Kühlmedium (19), wobei das Kühlmedium (19) mehrfach umgelenkt wird, dadurch gekennzeichnet, daß das Kühlmedium (19) im Gehäusemantel, der die zu kühlende Innenwand (24) umschließt, in axialer Richtung in gleich beabstandeten Kühlkanälen (25) strömt, die Kühlschlangen (50) bilden, daß jeder Stromfaden des Kühlmediums (19) in jedem Ein- und Austritt des Mantels der Wirbelstromleistungsbremse (1) zufolge Ausgestaltung endseitiger Eintritts- (27) bzw. Austrittsräume (28) gleiche Strömungsgeschwindigkeit besitzt, daß das Kühlmedium (19) an einem Ende der Wirbelstromleistungsbremse (1) über eine Eintrittsöffnung (26) eintritt und an ihrem anderen Ende aus einer Austrittsöffnung (29) austritt, die gegeneinander um im wesentlichen 180° versetzt sind.

2. Wirbelstromleistungsbremse zur Durchführung des Verfahrens nach Anspruch 1 mit Anschlußflanschen für zu untersuchende Kraftmaschinen mit einer im magnetisierbaren Teil angeordneten Ständerwicklung als Erreger (10) und einem aus magnetisierbarem Material bestehenden Rotor (3) und um den Rotor angeordnete Kühlkanäle sowie einer Kühlmediumzu- und -abführung, dadurch gekennzeichnet, daß an der einen axialen Endebene der Wirbelstromleistungsbremse (1) ein Eintrittsraum (27) und an der anderen axialen Endebene ein Austrittsraum (28) vorgesehen ist, deren eine Deckflächen die Stirnwände (32, 32') des Gehäuses (2) der Wirbelstromleistungsbremse sind, daß diese Deckflächen (32, 32') mittels im Mantel der Wirbelstromleistungsbremse (1) verlaufender axialer gleichmäßig am Umfang der Räume (27, 28) verteilter Kühlkanäle (25) miteinander verbunden sind, daß jeweils mehrere Kanäle zu einer Kühlschlange (50) mit nur einer Öffnung zum Eintrittsraum (27) bzw. Austrittsraum (28) zusammengefaßt sind, durch Abdichten der entsprechenden restlichen Kühlkanäle in den Eintrittsraum (27) bzw. Austrittsraum (28) und einer Verbindung der entsprechenden Kühlkanäle miteinander innerhalb des Mantels, daß die anderen Deckflächen der Räume (27, 28) eine axiale Entfernung zum Gehäuse (2) der Wirbelstromleistungsbremse aufweisen und eine Eintritts- (26) bzw. Austrittsöffnung (29) tragen, daß eine Zylinderwand (34, 34') als äußere Raumbegrenzung sich zwischen den Deckflächen (32, 33 bzw. 32', 33') erstreckt, daß eine einen spiraligen Verlauf aufweisende Innenwand (35, 35') als innere Raumbegrenzung sich zwischen den Deckflächen (32, 33 bzw. 32', 33') erstreckt und daß die Eintritts- (26) bzw. Austrittsöffnung (29) im Bereich des maximalen Abstandes zwischen Zylinderinnendurchmesser und spiraliger Innenwand (35,35')angeordnet sind und wie diese Bereich um 180° gegeneinander versetzt sind.

3. Wirbelstromleistungsbremse nach Anspruch 2, dadurch gekennzeichnet, daß sechzehn Kühlschlangen (50) im Mantel der Wirbelstromleistungsbremse vorgesehen sind.

## Claims

1. Method of cooking a casing inner wall (24) of an eddy current dynamometric brake (1), said inner wall (24) being heated by eddy currents, with a cooling medium (19), in which the cooling medium (19) is subjected to multiple deflections, characterized in that the cooling medium (19) flows, in the casing shell which surrounds the inner wall (24) to be cooled, in axial direction in equally spaced cooling channels (25) which form cooling coils (50), that each filament of flow of the cooling medium (19) possesses, due to the arranging of end entry spaces (27) and exit spaces (28), identical flow rate in each inlet and outlet of the shell of the eddy current dynamometric brake (1), that the cooling medium (19) enters at one end of the eddy current dynamometric brake (1) through an entry opening (26) and exits at its other end out of an exit opening (29) which are offset from one another by more or less 180°.

2. Eddy current dynamometric brake for implementing the method according to claim 1 with coupling flanges for prime movers to be tested, with a stator winding arranged in the magnetizable part as exciter (10) and a rotor (3) consisting of magnetizable material, and cooling channels arranged around the rotor together with a cooling medium feeding and discharge system, characterized in that on the one axial end plane of the eddy current dynamometric brake (1) there is provided an entry space (27) and on the other axial end plane an exit space (28), whose top surfaces are the front walls (32, 32') of the casing (2) of the eddy current dynamometric brake, that these top surfaces (32, 32') are connected to one another by means of axial cooling channels (25) running in the shell of the eddy current dynamometric brake (1) and distributed uniformly at the periphery of the spaces (27, 28), that several channels are respectively combined to form a cooling coil (50) with only one opening to the entry space (27) or exit space (28), by sealing of the corresponding remaining cooling channels into the entry space (27) or exit place (28) and of a connection of the corresponding cooling channels to one another within the shell, that the other top surfaces of the spaces (27, 28) exhibit an axial spacing from the shell (2) of the eddy current dynamometric brake and bear an inlet opening (26) or outlet opening (29), that a cylinder wall (34, 34') extends as external spatial boundary between the top surfaces (32, 33 and 32', 33'), that an inner wall (35, 35') exhibiting a spiral course extends as internal spatial boundary between the top surfaces (32, 33 and 32', 33') and that the entry opening (26) and exit opening (29) are arranged in the region of the maximum spacing between cylinder inner diameter and spiral inner wall (35, 35') and like this region are offset from one another by 180°.

3. Eddy current dynamometric brake according to claim 2, characterized in that sixteen cooling coils (50) are provided in the shell of the eddy current dynamometric brake.

## Revendications

1. Procédé de refroidissement d'une paroi intérieure de carter (24), chauffée par des courants de Foucault, d'un frein de puissance courants de Foucault (1), avec un fluide de refroidissement (19), ce dernier étant soumis plusieurs changements de direction, caractérisé en ce que le fluide de refroidissement (19) situé dans l'enveloppe de carter qui entoure la paroi intérieure (24) à refroidir s'écoule en direction axiale, dans des canaux de refroidissement (25) équidistants qui forment des serpentins de refroidissement (50), que chaque piste d'écoulement du fluide de refroidissement (19), dans chaque entrée et sortie de l'enveloppe du frein de puissance à courants de Foucault (1), présente des vitesses d'écoulement identiques, par suite de la configuration des volumes d'entrée (27) et de sortie (28) situés côté extrémité, que le fluide de refroidissement (19) entre à une extrémité du frein (1) par un orifice d'entrée (26) et sort à son autre extrémité par un orifice de sortie (29), orifices décalés l'un par rapport à l'autre de sensiblement 180°.

2. Frein de puissance à courants de Foucault, pour mettre en oeuvre le procédé selon la revendication 1, comportant des brides de raccordement pour les moteurs à essayer, ayant un enroulement de stator disposé dans la partie magnétisable, en tant qu'excitatrice (10) et un rotor (3) composé d'un matériau magnétisable et des canaux de refroidissement disposés autour du rotor, ainsi qu'une amenée et une évacuation de fluide de refroidissement, caractérisé en ce que, dans un plan axialement à l'extrémité du frein de puissance à courants de Foucault (1) est prévu un volume d'entrée (27) et que sur l'autre plan axialement à l'autre extrémité est prévu un volume de sortie (28), dont les surfaces de couverture sont les parois frontales (32,32') du carter (2) du frein, que ces surfaces de couverture (32,32') sont reliées entre elles au moyen de canau de refroidissement (25) répartis dans l'enveloppe du frein (1), s'étendant axialement et répartis régulièrement à la périphérie des volumes (27,28), que chaque fois plusieurs canaux sont groupés en un serpentin de refroidissement (50) avec un seul orifice pour la volume d'entrée (27), respectivement le volume de sortie (28), par isolation étanche des canau de refroidissement correspondants restant dans le volume d'entrée (27), respectivement le volume de sortie (28) et une liaison des canaux de refroidissement correspondants entre eux, à l'intérieur de l'enveloppe, les autres surfaces de couverture des volumes (27,28) présentant un espacement axial par rapport au carter (2) du frein et portant un orifice d'entrée (26), respectivement de sortie (29), une paroi cylindrique (34,34') s'étendant, à titre de limitation de l'espace, entre les surfaces de couverture (32,33 respectivement 32',33'), une paroi intérieure (35,35'), d'allure spirale et servant de délimitation intérieure de l'espace, s'étendant entre les surfaces de couverture (32,33) respectivement 32',33'), et l'orifice d'entrée (26), respectivement de sortie (29) étant disposés dans la zone de l'espacement maximal entre le diamètre intérieur du cylindre et la paroi intérieure spirale (35,35') et décalés l'un par rapport à l'autre de 180°, comme cette zone.

3. Frein à courants de Foucault selon la revendication 2, caractérisé en ce que seize serpentins de refroidissement (50) sont prévus dans l'enveloppe du frein de puissance à courants de Foucault.

Fig 1

Fig 2

Fig 3

Fig 3a

EP 0 253 903 B1

*Fig 4*

50